# EUROPEAN PATENT APPLICATION

(11) **EP 0 557 027 A1**
(43) Date of publication of application: **25.08.1993**
(21) Application number: 93301047.2
(22) Date of filing: 12.02.1993
(51) Int. Cl.: C07F 7/18, C10M 105/76

(54) **Process for the manufacture of an ester of an organosilane**

(30) Priority: 18.02.1992 FR 9202123
(71) Applicant: BP Chemicals Limited, London EC2M 7BA (GB); BP CHEMICALS S.N.C., F-92400 Courbevoie (FR)
(72) Inventor: Gritti, Sergio, F-13117 Laverna (FR)
(74) Representative: Hymers, Ronald Robson

(57) **Abstract**

The present invention relates to a process for the manufacture of a mixed glycol and glycol ether ester of an organosilane characterised in that it comprises the following steps:
(a) reacting a polysiloxane with an alcohol in the presence of a catalyst,
(b) separating the catalyst used in step (a) from the product obtained in step (a),
(c) reacting the product obtained in step (b) with a glycol and with a glycol ether.

The mixed glycol and glycol ether ester of an organosilane obtained according to the process of the invention can be used as a constituent of a hydraulic fluid.

## Description

The present invention relates to a process for the manufacture of a mixed glycol and glycol ether ester of an organosilane, which can be used in a hydraulic fluid.

It is known, according to British Patent GB 1480738, to use mixed glycol and glycol ether esters of an organosilane as components of hydraulic fluids. According to GB 1480738 a mixed ester of an organosilane is prepared by a process comprising the reaction of a dichlorosilane with a diol or a polyol and with a glycol monoether. This process has the major disadvantage of using a chlorosilane which is a toxic and extremely corrosive product, which must be handled in appropriate equipment. Furthermore, the mixed ester obtained can contain traces of chlorine, and this makes a hydraulic fluid containing the mixed ester corrosive.

Another process for the preparation of a mixed ester of an organosilane which can be used in hydraulic fluids is also known according to US Patent 4467105. This process comprises a transesterification reaction of a dialkoxysilane with glycols or with glycol monoethers. The alkoxy groups of the dialkoxysilane used are derived from an aliphatic alcohol which is released during the reaction. According to this patent this transesterification reaction is slow and incomplete and results in the formation of undesirable products.

Another process for the preparation of a mixed glycol and glycol ether ester of an organosilane is also known according to US Patent 4467105. This process comprises a transesterification reaction between a glycol and a dialkoxysilane in which the alkoxy groups originate from glycol monoalkyl ethers. During the reaction the glycol monoalkyl ethers are released and then removed by fractional distillation. However, this removal can be difficult to perform, bearing in mind that a glycol ether generally has a high boiling temperature. Furthermore, this process suggests preparing the dialkoxysilane from the corresponding chlorosilane.

The present invention consists of a process for the manufacture of a mixed ester of an organosilane which avoids or at least mitigates the above-mentioned problems. In particular the invention comprises a simple means for preparing an intermediate product comprising essentially dialkoxysilanes. Moreover, the invention uses compounds which do not contain chlorine and the mixed ester obtained is completely free from chlorine.

The subject of the present invention is therefore a process for the manufacture of a mixed glycol and glycol ether ester of an organosilane characterised in that it comprises the following steps:
(a) reacting a polysiloxane with an alcohol in the presence of a catalyst,
(b) separating the catalyst used in step (a) from the product obtained in step (a)
(c) reacting the product obtained in step (b) with a glycol and with a glycol ether.

The process therefore comprises a first reaction of a polysiloxane with an alcohol during which an intermediate product which is a mixture of silicon containing compounds and water are formed.

The polysiloxane used generally has the following formula (I):

(R1R2R3-Si)m-(-O-SiR1R2)n-(O-Si-R1R2R3)m

in which R1, R2 and R3 are identical or different alkyl radicals which can have from 1 to 10 carbon atoms, m is 0 or 1 and n is an integer which is for example from 0 to 60 when m is 1 and for example from 3 to 5 when m is 0. Typically radicals R1, R2 and R3 are methyl radicals. In the general formula (I) when m is 0, the polysiloxane is a ring compound. Octamethylcyclotetrasiloxane, which contains 4 silicon atoms and which is a commercially available product, can advantageously be used. When m is 1, the polysiloxane is a linear compound.

In order to prepare a mixed glycol and glycol ether ester of an organosilane useful in a hydraulic fluid as a coupling agent, the polysiloxane used can have the general formula (II):

(R1R2R3-Si)m-(-O-SiR1R2)n-(O-Si-R1R2R3)m

in which R2 is a radical having the general formula (III):

- R6 -(0-CHR7-CH2)s-OR8

in which R6 is an alkyl radical having for example from 2 to 4 carbon atoms and is in particular an aklyl radical having 3 carbon atoms, R7 is a hydrogen atom or a methyl radical, R8 is an alkyl group having for example from 1 to 4 carbon atoms and s is an integer which is for example from 1 to 10, while R1, R3, m and n have the same meanings as above. Surprisingly, this polysiloxane having the long radical R2 can be used in the process of the invention without a substantial modification of the yields of the reactions.

The alcohol used in the first reaction can be an aliphatic monoalcohol having from 1 to 10 and preferably from 4 to 8 carbon atoms. Typically the alcohol is n-butanol. An alcohol which has a relatively low boiling temperature is preferably used in order to enable it to be easily separated from the final ester obtained during the second reaction.

According to the present invention the first reaction is typically performed at atmospheric pressure and at a temperature which is in the range 80 to 150°C. In order to improve the yield of the reaction, the water formed can be removed from the reaction mixture. This removal of water can take place by means of an azeotropic distillation. For this in mind, the reaction can be performed in the presence of a liquid capable of forming an azeotrope with water such as, for example, n-octane. In this case, in order to remove the water without entrainment of alcohol, the latter is chosen so as to have a boiling temperature higher than that of the azeotrope.

At the end of the first reaction, an intermediate product which is a mixture of silicon containing compounds is obtained. This product comprises essentially dialkoxysilanes which have the following general formula (IV):

R-O(Si-OR1R2)p-R

in which R denotes the radical originating from the alcohol, R1 and R2 having the same meanings as in formula (I) or (II) and p being an integer which is for example in the range 1 to 10. In order subsequently to manufacture a mixed organosilane ester which has as few nonhydrolysable functional groups as possible, it is preferred to obtain a product comprising a high proportion or exclusively of a compound having the formula (IV) in which p is equal to 1. With this in mind, the first reaction is carried out with a large excess of alcohol in relation to the silicon atoms of the polysiloxane and in particular using more than 3 moles and preferably more than 10 moles of alcohol function per mole of silicon atom in the polysiloxane. At the end of the reaction generally after the removal of the water formed, the excess of alcohol not used can be removed from the reactional mixture, for example by distillation.

During the first reaction of the process a catalyst known for this type of reaction is used. It can be a base such as sodium hydroxide or potassium hydroxide. The quantity of catalyst used is relatively large ; for example, from 0.02 to 0.2 mole of catalyst are used per mole of silicon atoms present in the polysiloxane. Since the quantity of catalyst used is relatively large according to the process of the invention the catalyst must be separated from the obtained product in order to obtain a product free or substantially free from catalyst. This step is essential to obtain a mixed ester of an organosilane directly suitable for use in a hydraulic fluid.

This catalyst separation step can advantageously be made by distillation of the intermediate product obtained at the end of the first reaction. This distillation can be a vacuum distillation. The obtained distilled product is mainly a compound having the formula (IV) in which p is equal to 1. After the distillation, the distillation residue can be used for reacting with alcohol in the presence of a base in order to form the compound having the formula (IV) in which p is equal to 1. After this reaction the obtained product can be distilled to obtain mainly a compound having the formula (IV) in which p is equal to 1.

The process of the invention also comprises a second reaction which consists in reacting the product obtained after the catalyst separation step, with a glycol and with a glycol ether. The glycol and the glycol ether can react with the product together or separately. During this reaction the desired mixed ester is obtained with simultaneous release of the alcohol used during the first reaction.

The glycol can have the following general formula (V):

HO-(CHR4-CH2-O)qH

in which R4 is a methyl radical or a hydrogen atom and q is an integer for example from 1 to 4. Diethylene glycol or triethylene glycol can be used. The glycol can be a mixture of glycols.

The glycol ether can have the following general formula (VI):

R5-(OCH2-CHR4)rOH

in which R5 is a hydrocarbon radical which has from 1 to 10 carbon atoms, R4 has the same meaning as in formula (V) and r is an integer ranging from 1 to 5. The glycol ether can be methoxytriethylene glycol. The glycol ether can be a mixture of glycol ethers.

The second reaction can be performed for example at atmospheric pressure and at a temperature which is preferably from 40 and 200°C. In fact, it has surprisingly been found that practically no undesirable products are formed when a reaction of a dialkoxysilane with a glycol and with a glycol ether is performed at a temperature lower than 200°C. On the other hand, when the reaction is performed at a temperature below 40°C the reaction is very slow.

A catalyst such as a base e.g. sodium or potassium hydroxide, can be used during the second reaction. The quantity of catalyst used is generally very small. Typically from 50 to 400 ppm of catalyst in relation to the reagents of the second reaction are used. In order to promote the reaction, the released alcohol can be removed from the reaction mixture. This removal can be performed by means of an azeotropic distillation. With this in mind, the reaction is performed in the presence of a liquid capable of forming an azeotrope with the alcohol, such as, for example, n-octane. Moreover, from 0.5 to 0.8 mole of glycol and from 0.5 to 1.2 moles of glycol ether can be used per mole of silicon atoms present in the product obtained in step (b). Glycol and glycol ether not used can advantageously be removed.

Since only very small amounts of catalyst are used in the second reaction the final product contains very little catalyst typically less of 400 ppm in relation to the mixed ester of the organosilane. Thus, it can be directly used without separation of the catalyst as a constituent of a hydraulic fluid and in particular of a brake fluid. When the polysiloxane used has the general formula (II) the final product can be used as a coupling agent in hydraulic fluids based on a silicon containing compound. This coupling agent is used to avoid a phase separation after hydrolysis of a part of the silicon-containing compounds.

Thus the present invention includes a process for the manufacture of a mixed glycol and glycol ether ester of an organosilane comprising the following steps : (a) reacting a polysiloxane with an alcohol in the presence of a catalyst while the water formed is removed, (b) distillating the product obtained in step (a) to obtain mainly a dialcoxysilane having one silicon atom, (c) reacting the dialcoxysilane obtained in step (b) with a glycol and with a glycol ether.

The present invention also includes a reaction between a polysiloxane and an alcohol characterised in that more than 3 moles of alcohol function per mole of silicon atom in the polysiloxane are used. In this reaction the polysiloxane and the alcohol used can be the same as described above.

The following examples illustrate the present invention.

### Example 1

### First reaction

8259 g of octamethylcyclotetrasiloxane, 33075 g of n-butanol, 35 g of potassium hydroxide and 6511 g of n-octane were introduced into a 50-litre stainless steel reactor fitted with a stirring system and a heating jacket and supporting a distillation column. The reactor was heated to 122°C at atmospheric pressure and 1293 g of water were removed by virtue of an azeotrope with n-octane, over 40 hours. At the end of this time a vacuum distillation was carried out, from which 10624 g of dialkoxysilane (A) of formula (C4H90)2Si(CH3)2 were obtained, and 6122 g of a residue (B) containing products which had a higher molecular weight.

### Second reaction

204 g of dialkoxysilane (A) obtained during the first reaction, 164 g of methoxytriethylene glycol, 75 g of triethylene glycol, 0.15 g of potassium hydroxide and 218 g of n-octane were introduced into a 1-litre reactor fitted with a means of stirring and supporting a distillation column. The reactor was heated to a temperature of between 170 and 180°C so as to distil 139 g of n-butanol at the top of the column, in the form of an azeotrope with n-octane, followed by 12 g of unused dialkoxysilane. A mixed glycol glycol ether ester of an organosilane (C) having a weight average molecular weight of 600 g, was obtained in the reactor.

### Example 2

### First reaction

296 g of octamethylcyclotetrasiloxane, 3600 g of n-butanol, 326 g of n-octane and 10 g of potassium hydroxide were introduced into a 5-litre reactor fitted with a stirring system and supporting a distillation column. The reactor was heated to 120°C at atmospheric pressure and 64 g of water were removed over 10 hours by distillation of an azeotrope of water and n-octane. Then, at the end of this time, the unused n-butanol was distilled and then a product (D) containing 72 % by weight of dialkoxysilane of formula (C4H90)2Si(CH3)2.

### Second reaction

The procedure was exactly as in the second reaction of example 1, except for the fact that the dialkoxysilane (A) was replaced by the product (D). A mixed glycol glycol ether ester of an organosilane (E) having a weight average molecular weight of 600 g, was obtained in the reactor.

## Claims

1. A process for the manufacture of a mixed glycol and glycol ether ester of an organosilane characterised in that it comprises the following steps:
(a) reacting a polysiloxane with an alcohol in the presence of a catalyst,
(b) separating the catalyst used in step (a) from the product obtained in step (a),
(c) reacting the product obtained in step (b) with a glycol and with a glycol ether.

2. A process according to Claim 1, characterised in that the polysiloxane has the general formula (I)
(R1R2R3-Si)m-(-O-SiR1R2)n-(O-Si-R1R2R3)m
in which R1, R2 and R3 are identical or different alkyl radicals which have from 1 to 10 carbon atoms, m is 0 or 1 and n is an integer which is from 0 to 60 when m is 1, and from 3 to 5 when m is 0.

3. A process according to Claim 1, characterised
in that the polysiloxane has the general formula (II):
(R1R2R3-Si)m-(-O-SiR1R2)n-(O-Si-R1R2R3)m
in which R1 and R3 are alkyl radicals which have from 1 to 10 carbon atoms, m is 0 or 1 and n is an integer which is from 0 to 60 when m is 1, and from 3 to 5 when m is 0, and R2 is a radical having the general formula (III):
- R6 -(0-CHR7-CH2)s-OR8
in which R6 is an alkyl radical having from 2 to 4 carbon atoms, R7 is a hydrogen atom or a methyl radical, R8 is an alkyl group having from 1 to 4 carbon atoms and s is an integer which is from 1 to 10.

4. A process according to any one of Claims 1 to 3, characterised in that the alcohol is an aliphatic monoalcohol which has from 1 to 10 carbon atoms.

5. A process according to Claim 4, characterised in that the alcohol is an aliphatic monoalcohol having from 4 to 8 carbon atoms.

6. A process according to any one of Claims 1 to 5, characterised in that the reaction of step (a) is performed by using more than 3 moles of alcohol function per mole of silicon atom in the polysiloxane.

7. A process according to any one of Claims 1 to 6, characterised in that the reaction of step (c) is performed at a temperature lower than 200°C.

8. A process according to any one of Claims 1 to 7, characterised in that step (b) is performed by distillation of the product obtained in step (a).

9. Use of the mixed ester obtained according to the process according to any one of Claims 1 to 8, as a constituent of a hydraulic fluid.

10. A reaction between a polysiloxane and an alcohol characterised in that more than 3 moles of alcohol function per mole of silicon atom in the polysiloxane are used.

11. A process for the manufacture of a mixed glycol and glycol ether ester of an organosilane characterised in that it comprises the following steps:
(a) reacting a polysiloxane with an alcohol in the presence of a catalyst while the water formed is removed,
(b) distillating the product obtained in step (a) to obtain mainly a dialcoxysilane having one silicon atom,
(c) reacting the dialcoxysilane obtained in step (b) with a glycol and with a glycol ether.
